# EUROPÄISCHE PATENTSCHRIFT

(11) **EP 2 566 667 B1**
(45) Veröffentlichungstag und Bekanntmachung des Hinweises auf die Patenterteilung: **25.05.2016**
(21) Anmeldenummer: 11716179.4
(22) Anmeldetag: 14.04.2011
(51) Int. Cl.: G05B 19/423, B25J 13/02, G01S 5/16

(54) **HANDGERÄT UND VERFAHREN ZUM STEUERN UND/ODER PROGRAMMIEREN EINES MANIPULATORS**
HANDHELD DEVICE AND METHOD FOR CONTROLLING AND/OR PROGRAMMING A MANIPULATOR
APPAREIL À MAIN ET PROCÉDÉ DE COMMANDE ET/OU DE PROGRAMMATION D'UN MANIPULATEUR

(30) Priorität: 06.05.2010 DE 102010019640
(43) Veröffentlichungstag der Anmeldung: 13.03.2013
(73) Patentinhaber: KUKA Roboter GmbH, 86165 Augsburg (DE)
(72) Erfinder: SEDLMAYR, Andreas, 82256 Fürstenfeldbruck (DE)
(74) Vertreter: Schlotter, Alexander Carolus Paul
(86) Internationale Anmeldenummer: PCT/EP2011/001907
(87) Internationale Veröffentlichungsnummer: WO 2011/137970

(56) Entgegenhaltungen:
- US-A1- 2009 187 373

## Beschreibung

Die vorliegende Erfindung betrifft ein tragbares Handgerät und ein Verfahren zum Steuern und/oder Programmieren eines Manipulators, insbesondere eines Roboters.

In Arbeitsprozessen fährt ein Manipulator beim Ausführen eines Programms mit einem Referenzpunkt, beispielsweise dem Tool Center Point ("TCP"), verschiedene Arbeitspunkte an, deren Positionen vorher in der Manipulatorsteuerung abgespeichert wurden.

Vorliegend wird als Position eines Punktes allgemein seine Lage, i.e. Abstandskomponenten des Punktes zum Ursprung eines Bezugskoordinatensystems, und/oder eine Orientierung eines referenzpunktfesten Koordinatensystems relativ zu einem Bezugskoordinatensystem bezeichnet. Die Position eines Arbeitspunktes im Raum kann daher beispielsweise durch eine oder mehrere kartesische Koordinaten (x, y, z) des Referenzpunktes in einem Koordinatensystem, das zum Beispiel im Grundgestell eines Manipulators oder einer Bearbeitungszelle definiert ist, und/oder ein oder mehrere Winkel, beispielsweise EULER- oder KARDAN-Winkel (α, β, γ) gegen dieses Koordinatensystem beschrieben werden.

Um einen Arbeitspunkt anzufahren, muss ein Manipulator in seinen Gelenken bestimmte Gelenkstellungen, beispielsweise Drehwinkel, einnehmen, wobei bei bekannter Kinematik des Manipulators Gelenkstellungen und Position des Punktes im Arbeitsraum durch Lösen der Vorwärts- bzw. Rückwärtskinematik ineinander transformiert werden können. Eine Position eines Punktes kann daher gleichermaßen beispielsweise durch Gelenkstellungen des Manipulators beschrieben und entsprechend in der Manipulatorsteuerung abgespeichert werden.

Um solche Arbeitspunkte abzuspeichern, ist neben der offline-Programmierung und dem Teachen durch manuelles Anfahren der Arbeitspunkte mit dem Manipulator beispielsweise aus der WO 01/30545 A1 bereits ein tragbares Handgerät bekannt, dessen Position durch ein optisches Trackingsystem und Beschleunigungsaufnehmer erfasst wird, und das ein Tastelement mit einem definierten Referenzpunkt aufweist. Der Bediener führt diesen Referenzpunkt durch Bewegen des Handgerätes in den gewünschten Arbeitspunkt, wo die Position des Referenzpunkts mittels des Trackingsystems und der Beschleunigungsaufnehmer erfasst und als Position des Arbeitspunktes abgespeichert wird.

In der DE 100 48 952 A1 wird vorgeschlagen, ein Tastelement relativ zu Sensoren des Handgerätes zu verschwenken, um den Blickkontakt zwischen den optischen Sensoren und Referenzmarkierungen eines Trackingsystems zu erleichtern. Damit wird jedoch nicht nur die Transformation zwischen der erfassten Raumposition der Sensoren und dem Referenzpunkt des Tastelementes verändert, was eine zusätzliche Erfassung dieser veränderlichen Transformation erfordert und eine zusätzliche Fehlerquelle darstellt. Es vereinfacht auch nicht die Bedienung des Handgerätes, da die zu bedienende Tastatur und das abzulesende Display mit den Sensoren verbunden sind. Müssen die Sensoren durch Drehen um den im Arbeitspunkt verbleibenden Referenzpunkt in eine bestimmte Position gebracht werden, um den Blickkontakt zu den Referenzmarkierungen zu ermöglichen, beispielsweise durch die offenbarte Verschwenkung von Tastelement und Sensoren gegeneinander, kann dies Tastatur und Display in eine für den Bediener ungünstige Position bringen.

Die nicht vorveröffentlichte deutsche Patentanmeldung DE 10 2008 062 624.4 der Anmelderin schlägt daher ein Handgerät zur Erfassung der Raumposition eines Arbeitspunkte mit einer gelenkig mit einer Positionserfassungseinrichtung verbundenen Handhabungseinrichtung vor.

Insbesondere in Bearbeitungsprozessen, etwa einem Schweißen, Schleifen, Polieren, Entraten oder dergleichen, steht der Manipulator wenigstens zeitweise in kraftschlüssigem Kontakt mit seiner Umgebung, insbesondere einem zu bearbeitenden Werkstück, welches dabei eine Reaktionskraft auf einen Referenzpunkt des Manipulators ausübt.

Damit der Manipulator dabei gewünschte Prozesskräfte auf seine Umgebung aufprägt, müssen diese als Sollgrößen einer Kraftregelung vorgegeben werden. Hierzu kann beispielsweise je nach Kontaktzustand zwischen Positions- und Kraftregelung umgeschaltet und/oder eine hybride Kraft-Positionsregelung, etwa eine Nachgiebigkeitsregelung wie insbesondere eine Impedanz- oder Admittanzregelung durchgeführt werden.

Die US 2009/0187373 A1 offenbart ein tragbares System zur Vermessung auf Basis einer kinematisch-seriellen Gelenksstruktur, welches eine Mensch-Maschine Schnittstelle aufweist. Am Kopfelement der Armstruktur befindet sich der Referenzpunkt für die Vermessung. Die Positionserfassung erfolgt durch Winkelencoder, die in den Gelenken verbaut sind und durch einen Laserscanner.

Die Programmierung solcher Regelungen ist mit den aus obigem Stand der Technik bekannten Handgeräten, die weder die Erfassung von Soll-Kräften noch die Erkennung von Kontaktzuständen gestatten, nicht möglich.

Aufgabe der vorliegenden Erfindung ist es, die Steuerung und/oder Programmierung eines Manipulators zu verbessern und wenigstens einen der vorgenannten Nachteile zu vermeiden.

Diese Aufgabe wird durch ein tragbares Handgerät mit den Merkmalen des Anspruchs 1 und/oder durch ein Verfahren mit den Merkmalen des Anspruchs 9 bzw. 12 gelöst. Anspruch 14 stellt ein entsprechendes Computerprogrammprodukt unter Schutz, die Unteransprüche betreffen vorteilhafte Weiterbildungen.

Ein erfindungsgemäßes tragbares Handgerät bzw. Verfahren dient zum Steuern und/oder Programmieren eines Manipulators, insbesondere eines Roboters. Dabei wird unter einem Programmieren insbesondere das Erfassen von Sollgrößen durch das Handgerät und deren Abspeichern im Handgerät oder einer, vorzugsweise damit dauernd oder zeitweise drahtgebunden, drahtlos oder über eine Schnittstelle, insbesondere eine USB-Schnittstelle, verbundenen, Verarbeitungseinrichtung, insbesondere einer Manipulatorsteuerung, verstanden, die dann versucht, diese Sollgrößen im Betrieb zu erreichen. Ein Steuern des Manipulators kann demgegenüber insbesondere online erfolgen, so dass der Manipulator zeitnah durch das Handgerät erfasste Sollgrößen einzustellen sucht, wenn er etwa als Teleroboter eingesetzt wird.

Zur kompakteren Darstellung wird vorliegenden als Steuerung auch eine Regelung, i.e. die Ausgabe von Stellgrößen auf Basis eines Vergleichs von Soll- und Ist-Größen bezeichnet. Ebenfalls zur kompakteren Darstellung wird auch ein antiparalleles Kräftepaar, i.e. ein Drehmoment, vorliegend verallgemeinert als Kraft bezeichnet. Insofern kann eine Krafterfassungseinrichtung im Sinne der vorliegenden Erfindung auch beispielsweise einen ein- oder mehrachsigen Drehmomentensensor oder ein- oder mehr-, insbesondere sechsachsigen Kraftmomentensensor aufweisen.

Ein Handgerät nach einem ersten Aspekt der vorliegenden Erfindung umfasst eine Handhabungseinrichtung zur Handhabung des Handgerätes durch einen Bediener, eine Positionserfassungseinrichtung und ein mit der Positionserfassungseinrichtung verbundenes Tastelement, an dem ein Referenzpunkt definiert ist, dessen Position mittels der Positionserfassungseinrichtung erfassbar ist.

Die Handhabungseinrichtung kann insbesondere eine Eingabeeinrichtung zur Eingabe durch den Bediener, beispielweise eine oder mehrere Tasten, Schalter oder dergleichen, eine Ausgabeeinrichtung zur Ausgabe an den Bediener, insbesondere eine oder mehrere Anzeigen, und/oder einen Handgriff für den Bediener aufweisen. Die Positionserfassungseinrichtung kann einen oder mehrere Marker, die durch eine bezugssystemfeste Trackingeinrichtung erfassbar sind, und/oder Sensoren aufweisen, die ihrerseits Referenzmarkierungen eines Bezugssystems erfassen, und so eine Erfassung der Position des Referenzpunktes des mit der Positionserfassungseinrichtung verbundenen Tastelements ermöglichen.

Erfindungsgemäßes wird vorgeschlagen, dass das Handgerät eine Krafterfassungseinrichtung zur Erfassung einer auf das Tastelement wirkende Reaktionskraft aufweist, und dass die Handhabungseinrichtung und die Positionserfassungseinrichtung gelenkig miteinander verbunden sind.

Die gelenkige Verbindung von Handhabungs- und Positionserfassungseinrichtung ermöglicht es, einerseits die Positionserfassungseinrichtung in eine gewünschte Position zu bringen, in der beispielsweise ihre Position gut erfassbar ist, da zum Beispiel ausreichend viele Marker für eine optische Trackingeinrichtung sichtbar sind, oder in der beispielsweise das mit der Positionserfassungseinrichtung verbundene Tastelement eine Soll-Position eines Manipulatorwerkzeuges simuliert und insbesondere eine gewünschte Prozesskraft auf die Umgebung ausübt, und zugleich andererseits die Handhabungseinrichtung in eine vorteilhafte Raumposition zu bringen, in der beispielsweise ihre Anzeige gut sichtbar, ihre Tastatur gut zugänglich oder ihr Griff ergonomisch günstig platziert ist.

Hierzu können in einer bevorzugten Ausführung Handhabungseinrichtung und Positionserfassungseinrichtung in einem Drehgelenk mit einem oder mehreren, vorzugsweise drei Drehfreiheitsgraden, wie sie ein Kugelgelenk zur Verfügung stellt, miteinander verbunden sein. Zusätzlich oder alternativ sind jedoch auch translatorische Gelenke wie Scharniere, Parallelogrammführungen, Linearachsen oder dergleichen möglich.

Freiheitsgrade des Gelenks zwischen Handhabungs- und Positionserfassungseinrichtung sind in einer bevorzugten Ausführung sperrbar oder selbstsperrend. Beispielsweise kann ein Kugelgelenk durch Reibung selbstsperrend in einer Drehstellung verbleiben, bis der Bediener diese durch Überwinden einer Mindestbedienkraft verstellt. Gleichermaßen kann ein Kugelgelenk in bestimmten Drehstellungen verrasten oder es können, beispielsweise durch Zustellschrauben, Aktivieren von Haltemagneten, Aktivieren von Bremsen oder dergleichen eine oder mehrere Drehrichtungen gesperrt werden. Gleiches gilt natürlich auch für translatorische Achsen entsprechender Gelenke.

Vorzugsweise ist das Gelenk zwischen Handhabungs- und Positionserfassungseinrichtung derart ausgebildet, dass es in einer Stellung verbleibt, solange durch die Krafterfassungseinrichtung erfasste, auf das Tastelement wirkende Reaktionskräfte einen vorgegebenen Wert nicht übersteigen, der vorzugsweise wenigstens einer vom Bediener ausübbaren Mindestkraft entspricht. Hierzu kann beispielsweise ein Reibschluss entsprechend hoch ausgebildet sein.

In einer bevorzugten Ausführung sind Handhabungseinrichtung und Positionserfassungseinrichtung lösbar miteinander verbunden, was die Kombination verschiedener Handhabungseinrichtungen, beispielsweise mit unterschiedlichen Anzeigen und/oder Bedienelementen, mit verschiedenen Positionserfassungseinrichtungen, die beispielsweise zur Erfassung durch unterschiedliche Trackingeinrichtungen eingerichtet sind, ermöglicht.

Entsprechend kann auch das mit der Positionserfassungseinrichtung verbundene Tastelement lösbar an der Positionserfassungseinrichtung befestigt sein, um eine Kombination unterschiedlicher Positionserfassungseinrichtungen mit verschiedenen Tastelementen zu ermöglichen, die beispielsweise unterschiedliche geometrische Abmessungen zum Antasten von Arbeitspunkten in unterschiedlichen Umgebungen oder zur Simulation eines Werkzeugs aufweisen und/oder mit unterschiedlichen Krafterfassungseinrichtungen versehen sein können. Auch solche lösbar an der Positionserfassungseinrichtung verbundene Tastelemente sind vorzugsweise relativ zu der Positionserfassungseinrichtung unbeweglich, um eine konstante Transformation zwischen der erfassten Raumposition der Positionserfassungseinrichtung und des Referenzpunktes an dem Tastelement zu gewährleisten.

In einer bevorzugten Ausführung ist in einem Griff der Handhabungseinrichtung ein Zustimmungsschalter angeordnet, der vom Bediener betätigt werden muss, um beispielsweise bei Bedarf Manipulator- oder Zusatzachsen verfahren zu können, und/oder um sicherzustellen, dass in der Umgebung des Bedieners angeordnete Manipulatoren diesen nicht gefährden. Besonders bevorzugt ist der Zustimmungsschalter mit dem Zeigefinger betätigbar, so dass andere Schalter insbesondere mit dem Daumen der die Handhabungseinrichtung haltenden Hand bedient werden können.

Um eine effiziente Erfassung sinnvoller, mit dem Manipulator realisierbarer Arbeitspunkte zu erleichtern, kann das Tastelement, gegebenenfalls zusammen mit der Positionserfassungseinrichtung, als Dummy-Werkzeug ausgebildet sein, i.e. im Wesentlichen die Form wenigstens eines Teils einer Außenkontur des Werkzeugs aufweisen, mit dem der Manipulator die Arbeitspunkte anfahren soll. Bevorzugt entspricht der an dem Tastelement definierte Referenzpunkt dem TCP.

Die Positionserfassungseinrichtung weist in einer bevorzugten Ausführung einen oder mehrere, vorzugsweise wenigstens drei, aktive und/oder passive Marker auf, die zur Erfassung durch eine Trackingeinrichtung ausgebildet sind. Hierbei kann es sich beispielsweise um emittierende, aktive oder reflektierende, passive Marker vorgegebener geometrischer Gestalt handeln, die durch eine optische Trackingeinrichtung, welche beispielsweise im sichtbaren oder ultravioletten Bereich arbeitet, oder eine akustische Trackingeinrichtung erfassbar sind, welche beispielsweise im Ultraschallbereich arbeitet.

Zusätzlich oder alternativ kann die Positionserfassungseinrichtung auch einen oder mehrere, vorzugsweise wenigstens drei Sensoren aufweisen, beispielsweise Beschleunigungssensoren, aber auch Sensoren eines inertialen Messsystems oder Sensoren, die ihrerseits aktive oder passive Marker eines Bezugssystems, beispielsweise optisch oder akustisch, erfassen und so ebenfalls die Erfassung der Raumposition der Positionserfassungseinrichtung und damit des Referenzpunktes des mit ihr verbundenen Tastelementes ermöglichen.

In einer bevorzugten Ausführung weist die Positionserfassungseinrichtung mehrere Marker und/oder Sensoren auf, die über den Umfang eines oder mehrerer Ringe verteilt sind, die sich um die, vorzugsweise im Wesentlichen zylindrische, Positionserfassungseinrichtung herum erstrecken. Dies erleichtert die Erfassung der Marker eines Ringes bzw. Erfassung durch Sensoren eines Ringes aus allen Richtungen normal zur Mittelsenkrechten durch den Mittelpunkt dieses Ringes und gestattet insbesondere eine Verdrehung der Positionserfassungseinrichtung um diese Mittelsenkrechte, ohne die Erfassung zu beeinträchtigen.

Vorzugsweise weist die Positionserfassungseinrichtung wenigstens zwei solcher Ringe auf, deren Mittelsenkrechten nicht koaxial sind und insbesondere miteinander einen Winkel größer oder gleich 10° einschließen. Dies erhöht die Sichtbarkeit bei Blickrichtung der Trackingeinrichtung bzw. Sensoren entlang einer Mittelsenkrechten eines Ringes auf die Marker bzw. Sensoren des anderen Ringes.

Häufig wird ein Werkzeug in einer bestimmten Hauptrichtung geführt und auf ein Werkstück aufgesetzt, die unter einem, beispielsweise prozessbedingten Winkel ausgerichtet ist, zum Beispiel im Wesentlichen normal zu einer Werkstückoberfläche. Zum Beispiel wird eine Klebepistole oder eine Schweißzange häufig vertikal zu einer horizontal ausgerichteten Werkstückoberfläche geführt.

Kameras einer Trackingeinrichtung werden andererseits bevorzugt ebenfalls unter bestimmten Winkeln, beispielsweise unter etwa 45° gegen die Flächennormale der Werkstückoberfläche geneigt. Ist nun eine Erfassungsrichtung von Markern bei aufgesetztem Handgerät ebenfalls im Wesentlichen unter etwa 45° gegen die Flächennormale der Werkstückoberfläche geneigt, ergibt sich eine optimale Erfassbarkeit durch die Kameras, die im Wesentlichen direkt in Erfassungsrichtung auf die Marker blicken. Allgemein erlaubt die Ausrichtung von Marker- bzw. Sensorerfassungsrichtung unter einem bestimmten Winkel eine Positionierung des Handgerätes innerhalb eines Kegels mit diesem Öffnungswinkel, ohne die Erfassung zu beeinträchtigen.

In einer bevorzugten Ausführung ist daher eine Erfassungsrichtung wenigstens eines Markers bzw. Sensors, in der die Erfassung besonders günstig ist, beispielsweise die optische Achse eines Sensors oder die Flächennormale eines reflektierenden Markers, unter einem Winkel gegen eine Hauptrichtung des Tastelementes und/oder der Positionserfassungseinrichtung, beispielsweise eine Längs- oder Symmetrieachse, eine bevorzugte Aufsetzrichtung des Tastelementes, eine Stoßrichtung des Dummy-Werkzeuges oder, bei in Erfassungsstellung aufgesetztem Dummy-Werkzeug, eine Flächennormale eines Werkstücks, auf dem der zu erfassende Arbeitspunkt liegt, geneigt, der zwischen 15° und 75°, insbesondere zwischen 30° und 60° liegt, und besonders bevorzugt im Wesentlichen 45° beträgt.

Bevorzugt weist die Handhabungseinrichtung eine Eingabeeinrichtung zur Eingabe durch den Bediener auf, die zur Steuerung einer Zusatzachse des Manipulators, insbesondere eines Werkzeugtisches eingerichtet ist. Hierdurch kann der Bediener insbesondere zum Antasten verschiedener Arbeitspunkte in unterschiedlichen Werkstückpositionen durch das Handgerät Zusatzachsen des Manipulators, beispielsweise die Drehachsen eines Dreh- und/oder Kipp-Tisches, auf dem das Werkstück fixiert ist, betätigen, um das Werkstück geeignet, insbesondere jeweils so zu positionieren, wie es später bei Bearbeitung des Werkstücks durch den Manipulator angeordnet ist, ohne hierzu ein weiteres Eingabegerät handhaben zu müssen.

In einer bevorzugten Ausführung wird zunächst eine Position des Referenzpunktes erfasst und diese anschließend vom Bediener in einer vorgegebenen Richtung, insbesondere einer Stoßrichtung eines Werkzeugs oder einer Flächennormale auf eine Werkstückoberfläche, verschoben, indem beispielsweise ein Verschiebebetrag eingegeben wird. Die solcherart gegenüber der erfassten Position in der vorgegebenen Richtung verschobene Position wird dann als Position des Arbeitspunktes des Manipulators erfasst.

Wenn bei der Erfassung und Abspeicherung von Arbeitspunktpositionen aufgrund von Mess- und Rechentoleranzen gespeicherte Arbeitspunkte, beispielsweise Schweiß- oder Klebepunkte, fälschlich innerhalb der Werkstückskontur liegen, so dass die Gefahr besteht, dass das manipulatorgeführte Werkzeug beim Ausführen eines auf solchen Positionen basierenden Programms durch den Manipulator in das Werkstück eindringt und dabei Werkstück und/oder-zeug beschädigt, kann der Bediener dies korrigieren, indem er innerhalb der Werkstückkontur liegende abgespeicherte Arbeitspunkte aus der Werkstückkontur heraus verschiebt. Dies ist jedoch, insbesondere bei einer Vielzahl von gespeicherten Positionen, offline ohne Werkstück, schwierig. Hier erleichtert die bevorzugten Ausführung die Erfassung einer vorteilhaften, außerhalb des Werkstücks liegenden Arbeitspunktposition, indem eine Richtung, beispielsweise die Stoßrichtung eines Werkzeugs oder die Flächennormale einer Werkstückoberfläche, vorzugsweise automatisch, vorgegeben und die zunächst fälschlich erfasste Position in dieser Richtung verschoben und danach als - nun außerhalb des Werkstücks liegende - Arbeitspunktposition abgespeichert wird.

Nach einem zweiten Aspekt der vorliegenden Erfindung wird durch ein Handgerät neben einer Position eines Referenzpunktes dieses Handgerätes auch eine auf dieses Handgerät, insbesondere diesen Referenzpunkt, wirkende Reaktionskraft erfasst und eine dominante Sollgröße einer Steuerung des Manipulators in wenigstens einer Richtung auf Basis wahlweise einer Positionskomponente der erfassten Position oder einer Kraftkomponente der erfassten Reaktionskraft vorgegeben.

Hierzu kann insbesondere ein Handgerät gemäß des vorstehend erläuterten ersten Aspekts verwendet werden, welches zu diesem Zweck die Krafterfassungseinrichtung zur Erfassung einer auf das Tastelement wirkende Reaktionskraft aufweist.

Indem nach dem zweiten Aspekt eine oder mehrere Positionskomponenten des Referenzpunktes und eine oder mehrere Kraftkomponenten einer von der Umgebung, insbesondere einem zu bearbeitenden Werkstück, auf das Tastelement, insbesondere in dessen Referenzpunkt, wirkende Reaktionskraft erfasst werden, können durch das Handgerät nicht nur Positions-, sondern auch Kraft-Sollgrößen vorgegeben werden.

Dabei muss jedoch für eine oder mehrere vorgegebene Richtungen, etwa eine kartesische, auf ein Manipulator-, Bahn- oder Werkstückbezugssystem bezogene Richtung, eine durch Freiheitsgrade des Manipulators definierte Richtung oder dergleichen, jeweils eine dominante Sollgröße für die Steuerung des Manipulators vorgegeben werden. Insofern eine Richtung im Sinne der vorliegenden Erfindung nicht nur kartesische Richtungen bezeichnen, sondern beispielsweise auch EULER- oder KARDAN-Winkel, Quaternionen, DENAVIT-HARTENBERG-Parameter, Aktuator- oder Gelenkstellungen eines Manipulators, Achsen eines Bahnkoordinatensystems oder dergleichen.

In einem einfachen Fall wird wahlweise für verschiedene Arbeitspunkte jeweils eine reine Kraft- oder eine reine Positionsregelung in allen Richtungen vorgegeben. So können beispielsweise für Hilfspunkte auf Zustell- oder Abhebebahnen ihre Positionen als Sollgrößen vorgegeben werden, für Arbeitspunkte, in denen der Manipulator in Kontakt mit der Umgebung steht, hingegen die dort durch ihn aufzuprägenden Kräfte.

Gleichermaßen können in hybriden Regelkonzepten auch für bestimmte Richtungen Positionen und für andere Richtungen Kräfte als Sollgrößen vorgegeben werden. So können beispielsweise beim Bearbeiten einer Fläche die Position in tangentialen Richtungen einer Bearbeitungsbahn vorgegeben werden, um etwa einem Bearbeitungsmuster optimal zu folgen, während in einer Richtung senkrecht zur Fläche eine Kraft vorgegeben wird, um eine gewünschte Anpresskraft, etwa zum Schleifen, Polieren oder dergleichen, zu gewährleisten. In diesem Zusammenhang sei nochmals darauf hingewiesen, dass vorliegend auch Drehmomente verallgemeinernd als Kräfte bezeichnet werden, so dass entsprechend Soll-Kräfte auch Soll-Drehmomente um vorgegebene Achsen darstellen können. So kann es beispielsweise bei Fügevorgängen zweckmäßig sein, für Drehachsen, um die ein manipulatorgeführtes Werkstück gekippt werden muss, wahlweise Soll-Winkel oder - Drehmomente vorzugeben.

Vorteilhafte Regelungen können in einer oder mehreren Richtungen sowohl eine Soll-Position als auch eine Soll-Kraft berücksichtigen, indem etwa bei einer Impedanzregelung aus vorgegebener Soll- und Ist-Position gemäß einem Kraftgesetz, etwa einem Federgesetz, eine Soll-Kraft bestimmt und diese dann durch eine Kraftregelung eingestellt wird. Umgekehrt kann in einer Admittanzregelung eine Differenz zwischen vorgegebener Soll- und Ist-Kraft gemäß einem Kraftgesetz in eine Soll-Position transformiert und diese durch eine Positionsregelung eingestellt werden. Insoweit wird dann eine von der Position und der Kraft als dominante Sollgröße verwendet, in der Impedanzregelung beispielsweise die vorgegebene Sollposition, in der Admittanzregelung die vorgegebene Sollkraft. Bei Berücksichtigung nur einer von der Position und der Kraft ist somit die vorgegebene die dominate Sollgröße im Sinne der vorliegenden Erfindung.

Erfindungsgemäß wird in einer oder mehreren Richtungen, vorzugsweise in ein, zwei oder drei translatorischen und/oder ein, zwei oder drei rotatorischen Freiheitsgraden, eine dominante Sollgröße einer Steuerung des Manipulators jeweils auf Basis wahlweise einer Positionskomponente der erfassten Position oder einer Kraftkomponente der erfassten Reaktionskraft vorgegeben.

Dabei können Positions- und Kraftkomponente in derselben Richtung zunächst synchron erfasst und anschließend eine von beiden zur Vorgabe der Sollgröße ausgewählt werden. Gleichermaßen kann entsprechend einer Wahl durch den Benutzer bereits alternativ jeweils nur die Positions- oder die Kraftkomponente in dieser Richtung erfasst werden.

Um diese Wahl vorteilhaft bereits während der Erfassung treffen zu können, umfasst in einer bevorzugten Ausführung eine Eingabeeinrichtung eines Handgerätes eine Wahleinrichtung zur Auswahl aus einer Positions- und einer Kraftkomponente. Dies ermöglicht insbesondere ein intuitives, situationsangepasstes Teachen, da der Bediener beim Führen des Handgerätes bestimmen kann, ob jeweils Positions- oder Kraftkomponenten für den Prozess vorrangig sind. Gleichermaßen kann auch nach der Erfassung zwischen der Vorgabe auf Basis der Positionskomponente und der Kraftkomponente gewählt werden, insbesondere bei einer Programmierung auf Basis der erfassten Werte, nachdem zunächst sowohl Positions- als auch Kraftkomponenten erfasst wurden.

Erfasste Positions- und/oder Kraftkomponenten werden in einer bevorzugten Ausführung einer Signalverarbeitung unterworfen, bevor auf ihrer Basis Soll-Größen vorgegeben werden. So können erfasste Komponenten etwa geglättet, gefiltert und/oder subgesampelt werden, um Messfehler oder ungewollte Mikrobewegungen bzw. -kraftschwankungen des Handgeräts zu reduzieren oder zu eliminieren.

Eine Signalverarbeitung kann insbesondere eine Transformation einer in einer Richtung erfassten Komponente in eine andere Richtung umfassen. So kann beispielsweise durch einen einachsigen Kraftsensor die Andruckkraft in einer Achsrichtung des Tastelements erfasst und diese in die Richtung senkrecht zu einer Bearbeitungsfläche projiziert werden, um als Soll-Anpresskraft vorgegeben zu werden.

Zusätzlich oder alternaiv kann eine Signalverarbeitung insbesondere eine Begrenzung einer erfassten Reaktions- auf maximal zulässige und/oder minimal erforderliche Prozesskräfte umfassen. Gleichermaßen kann die Signalverarbeitung auch eine, insbesondere konstante oder proportionale, Erhöhung bzw. Reduzierung erfasster Werte umfassen. Führt beispielsweise ein Bediener zum Teachen eines manipulatorgeführten Schneid- oder Poliervorgangs das Handgerät über ddas zu bearbeitende Werkstück, wobei die von ihm dabei ausgeübte Prozesskraft einerseits ungewollt leicht variiert und andererseits niedriger als die später vom Manipulator auszuübende Kraft ist, kann die erfasste Kraft zum Beispiel auf eine durch den Prozess bedingte Mindestanpresskraft transformiert werden.

Nach Vorstehendem kann eine dominante Sollgröße auch die einzige Sollgröße einer Steuerung sein, eine auf Basis einer Komponente vorgegebenen Sollgröße auch diese Sollgröße selber.

Zusätzlich oder alternativ zur Vorgabe der Sollgröße auf Basis wahlweise der Positions- oder der Kraftkomponente kann nach dem zweiten Aspekt der vorliegenden Erfindung ein Umgebungskontakt des Handgerätes auf Basis der erfassten Kraft erfasst werden.

Hierdurch wird es beispielsweise vorteilhaft möglich, entsprechende Transitionsbedingungen zu programmieren, indem etwa ein Handgerät anstelle eines manipulatorgeführten Werkzeugs an ein Werkstück herangeführt oder auf diesem gegen einen Anschlag verschoben wird. Auch hier können wiederum eine oder mehrere Richtungen berücksichtigt werden. So kann beispielsweise bei dem vorstehend erläuterten Schleifen durch eine entsprechend hohe erfasste Kraft in einer

Tangentialrichtung zur Bearbeitungsbahn das formschlüssige Erreichen eines Anschlages auf der Bearbeitungsfläche durch das Handgerät erfasst und so programmiert werden.

Der erste und zweite Aspekt sind vorwiegend anhand der Programmierung eines Manipulators erläutert. Insofern ist nochmals darauf hinzuweisen, dass beide Aspekte auch bei einer Steuerung, insbesondere Online-Steuerung, genutzt werden können, indem etwa bei einem durch das Handgerät ferngesteuerten Manipulator, der grundsätzlich zunächst mit seinem Referenzpunkt räumlich versetzt der erfassten Position des Referenzpunktes des Handgerätes folgt, durch eine Krafterfassungseinrichtung des Handgerätes ein Umgebungskontakt detektiert und infolgedessen, wenigstens richtungsselektiv, in eine Kraft- oder Nachgiebigkeitsregelung umgeschaltet werden kann, oder wahlweise zwischen einer Fernsteuerung einer Kraft- oder Positionskomponente gewechselt werden kann.

Beide Aspekte können synergetisch zusammenwirken, indem beispielsweise durch die gelenkige Verstellung des mit der Positionserfassungseinrichtung verbundenen Tastelements gegenüber der Handhabungseinrichtung Erfassungsrichtungen für Kräfte bzw. Positionen vorteilhaft vorgegeben werden können. So kann beispielsweise das Tastelement so zur Handhabungseinrichtung orientiert werden, dass durch diese ergonomisch günstig gewünschte Prozesskräfte auf ein Werkstück aufgeprägt und die entsprechenden Reaktionskräfte als Sollgrößen erfasst werden können.

Eine Krafterfassungseinrichtung gemäß dem ersten Aspekt weist vorzugsweise eine Erfassungsrichtung auf, die wenigstens im wesentlichen einer Stoßrichtung eines durch das Tastelement simulierten Werkzeugs, etwa einer Aufsetzrichtung einer Schweißzange oder einer Drehachse einer Schleif- oder Polierscheibe, entspricht. Zusätzlich oder alternativ können noch weitere Erfassungsrichtungen, insbesondere drei linear unabhängige Richtungen zur Erfassung von Einzelkräften und/oder drei linear unabhängige Richtungen zur Erfassung von Kräftepaaren bzw. Drehmomenten, vorgesehen sein, insbesondere in Form eines mehr- insbesondere sechsachsigen Kraft- und/oder Momentensensors.

Weitere Vorteile und Merkmale ergeben sich aus den Unteransprüchen und den Ausführungsbeispielen. Hierzu zeigt, teilweise schematisiert:
- Fig. 1:: ein tragbares Handgerät nach einer Ausführung der vorliegenden Erfindung in perspektivischer Ansicht;
- Fig. 2:: das auf eine Werkstückoberfläche aufgesetzte Handgerät nach Fig. 1 in einer Seitenansicht;
- Fig. 3:: das Handgerät nach Fig. 1 in der Draufsicht;
- Fig. 4-6:: das Handgerät nach Fig. 1 mit in verschiedene Stellungen verschwenkter Positionserfassungseinrichtung;
- Fig. 7:: ein tragbares Handgerät nach einer weiteren Ausführung der vorliegenden Erfindung in einer Seitenansicht;
- Fig. 8:: eine Krafterfassungseinrichtung des tragbaren Handgeräts nach Fig. 1 oder 7 in vergrößerter Darstellung; und
- Fig. 9: den Ablauf eines erfindungsgemäßen Verfahrens.

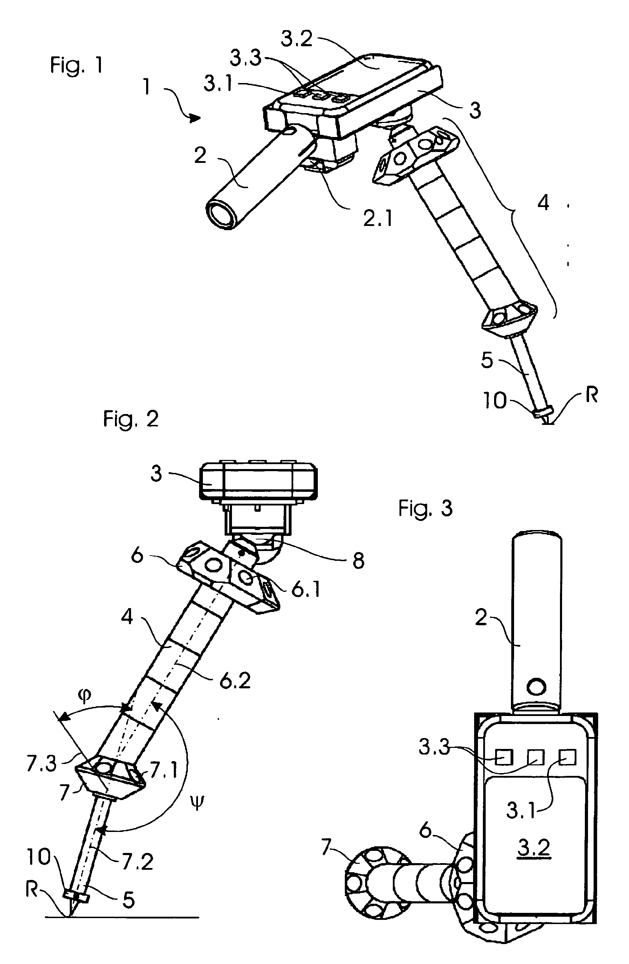

Fig. 1 zeigt ein tragbares Handgerät 1 nach einer Ausführung der vorliegenden Erfindung in perspektivischer Ansicht. Es umfasst eine Handhabungseinrichtung zur Handhabung des Handgerätes 1 durch einen Bediener mit einem zylindrischen Griff 2 für den Bediener und einer Ein-Ausgabeeinrichtung 3 in Form eines kompakten, tragbaren Computers, beispielsweise eines PDAs, mit einer Tastatur 3.1 zur Eingabe von Befehlen durch den Bediener und einer Anzeige 3.2 zur Anzeige von Informationen. Der PDA 3 ist lösbar an dem Griff 2 befestigt, der auf einer Griffunterseite (unten in Fig. 1) einen Zustimmungsschalter 2.1 aufweist.

Mittels eines Kugelgelenkes 8 (vgl. Fig. 2) ist eine Positionserfassungseinrichtung 4 gelenkig mit der Handhabungseinrichtung 3 verbunden und kann relativ zu dieser verschwenkt und verdreht werden. Dabei sind die Drehfreiheitsgrade selbstsperrend, indem das Kugelgelenk 8 eine entsprechend hohe Reibung aufweist, die Handhabungseinrichtung 3 und Positionserfassungseinrichtung 4 gegeneinander fixiert und nur durch den Bediener unter Aufbringung einer zusätzlichen Bedienkraft zur Überwindung der Reibung gelöst werden kann. Das Kugelgelenk 8 behält also ohne Eingriff durch den Bediener die jeweilige Relativstellung zwischen Handhabungseinrichtung 3 und Positionserfassungseinrichtung 4 bei, der Bediener kann jedoch Handhabungseinrichtung 3 und Positionserfassungseinrichtung 4 im Kugelgelenk 8 gegeneinander verschwenken und verdrehen.

Mit der Positionserfassungseinrichtung 4 ist ein auswechselbares Tastelement 5 lösbar verbunden, welches im Wesentlichen die Form einer Außenkontur eines Schneidwerkzeugs aufweist, und an dessen Spitze ein Referenzpunkt R definiert ist, der dem TCP eines tatsächlichen, manipulatorgeführten Schneidwerkzeugs entspricht.

Zur Erfassung der Position des Referenzpunktes R auf Basis der Position der Positionserfassungseinrichtung 4 wird diese durch eine optische Trackingeinrichtung (nicht dargestellt) erfasst. Hierzu erstreckt sich ein erster Ring 6 derart um die im Wesentlichen zylindrische Positionserfassungseinrichtung 4, dass seine Mittelsenkrechte 6.2 mit der Symmetrie- und Längsachse der Positionserfassungseinrichtung 4 zusammenfällt. In entsprechender Weise erstreckt sich ein zweiter Ring 7 derart um das im Wesentlichen ebenfalls zylindrische Tastelement 5, dass seine Mittelsenkrechte 7.2 mit dessen Symmetrie- und Längsachse zusammenfällt, die in der in Fig. 2 dargestellten Erfassungsstellung im Wesentlichen senkrecht auf der Werkstückoberfläche steht, wie es auch der Stoß- bzw. Führungsrichtung des tatsächlichen Schneidwerkzeugs entspricht. Die Längsachsen von Positionserfassungseinrichtung 4 und Tastelement 5 und damit auch die Mittelsenkrechten 6.2, 7.2 der beiden Ringe 6, 6 schließen einen Winkel 180°-β von ungefähr 15° ein.

Über den Umfang beider Ringe 6, 7 sind jeweils kreisförmige, reflektierende Marker 6.1 bzw. 7.2 verteilt, die von CCD-Kameras der Trackingeinrichtung (nicht dargestellt) erfasst werden. Die Erfassungsrichtung der Marker 7.1, i.e. die Flächennormale 7.3 auf die flachen Marker, in der diese maximal reflektieren und entsprechend von den CCD-Kameras besonders gut erfasst werden können, ist in Fig. 2 für einen Marker des Ringes 7 durchgezogen eingezeichnet und, wie in Fig. 2 erkennbar, unter einem Winkel α von ca. 45° gegen die Längsachsen von Tastelement 5, i.e. Mittelsenkrechte 7.2 des Rings 7 geneigt.

Die Marker 6.1 des Ringes 6 sind jeweils in der selben Richtung wie ihre korrespondierenden Marker 7.1 des Ringes 7 ausgerichtet. Aufgrund der gegenüber der Mittelsenkrechten 7.2 um den Winkel von ungefähr 15° abweichenden Orientierung der Mittelsenkrechten 6.2 ergeben sich deshalb für jeden Marker 6.1 verschiedene Winkellagen der Marker 6.1 auf dem Ring 6. Mit anderen Worten richtet die Orientierung der Marker 6.1 sich nicht nach der Lage der Mittelsenkrechten 6.2, sondern nach der Lage der Mittelsenkrechten 7.2.

Oberer und unterer Ring 6, 7 weisen über den Umfang verteilte Trapezflächen auf, wobei in jeder Trapezfläche ein Marker angeordnet ist. Dabei sind die Marker bezüglich der jeweiligen Trapezfläche gleich ausgerichtet. Dementsprechend ist jede Trapezfläche der Marker des oberen Rings 6 verschieden zur Mittelsenkrechten 6.2 ausgerichtet. Wie in Fig. 2 zu sehen, ist die ganz links dargestellte Trapezfläche des oberen Rings 6 sehr steil und die ganz rechts dargestellte Trapezfläche des oberen Rings 6 sehr flach. Mit anderen Worten ist eine Trapezfläche des oberen Rings 6 in einem bestimmten Segment stets parallel zu der Trapezfläche des unteren Rings 7 ausgerichtet.

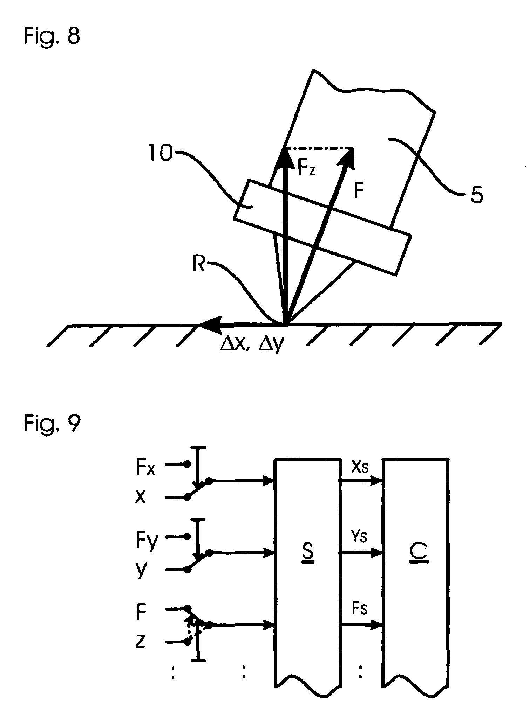

Wird das Tastelement 5, das die Form eines Dummy-Werkzeuges aufweist, mit seinem Referenzpunkt R in einem zu erfassenden Arbeitspunkt auf der in Fig.2, 8 durch eine horizontale Linie angedeutete Werkstückoberfläche derart aufgesetzt, dass seine Längsachse 7.2 im Wesentlichen normal zur Werkstückoberfläche orientiert ist, sind damit die Erfassungsrichtungen der Marker 7.1 im Wesentlichen unter 45° gegen die Werkstückoberfläche geneigt. Die CCD-Kameras der Trackingeinrichtung (nicht dargestellt) sind zur optimalen Erfassung ebenfalls im Wesentlichen unter 45° gegen die Werkstückoberfläche geneigt, so dass sie im Wesentlichen direkt auf Marker 7.1 blicken und diese maximal in die CCD-Kameras reflektieren. Auch die Marker 6.1 des Ringes 6 der demgegenüber um 15° abgeknickten Positionserfassungseinrichtung 4 sind gegen die Mittelsenkrechte 7.2 des unteren Rings 7 unter etwa 45° geneigt und damit von den CCD-Kameras sehr gut erfassbar.

Durch den Knick zwischen den Mittelsenkrechte 6.2, 7.2 der Ringe 6, 7 wird, wie insbesondere in der Draufsicht der Fig. 3 erkennbar, eine vollständige optische Verdeckung des Ringes 7 durch den Ring 6 verhindert und so eine Erfassbarkeit beider Markerringe 6, 7 aus einer Vielzahl von Kamerapositionen und in einer Vielzahl unterschiedlicher Orientierungen des Handgeräts 1 gewährleistet.

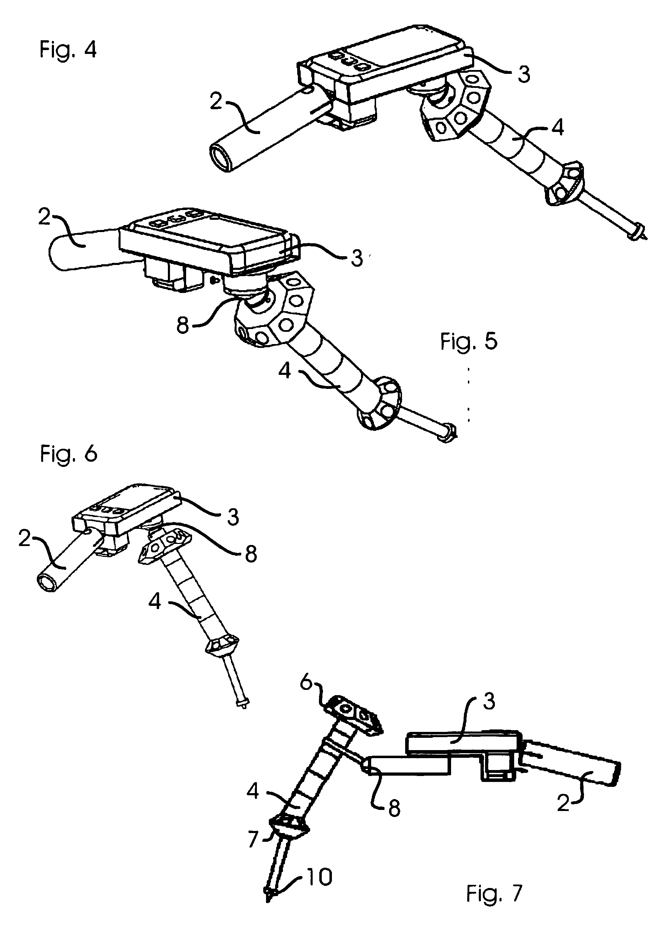

Wie in den Fig. 4 bis 6 exemplarisch dargestellt, können durch Verschwenken und Verdrehen der Positionserfassungseinrichtung 3 im Kugelgelenk 8 gegen die Handhabungseinrichtung 2, 3 bei gleichbleibend guter ergonomischer Positionierung von Griff 2, Anzeige 3.2 und Tastatur 3.1 eine Vielzahl unterschiedlicher Orientierungen des Dummy-Werkzeugs 5 dargestellt werden, wobei durch die vorgenannte Ausbildung der Positionserfassungseinrichtung 3 stets eine gute Erfassbarkeit von Markern 6.1, 7.1 durch die optische Trackingeinrichtung ermöglicht wird und durch die unbewegliche Befestigung des Tastelementes 5 an der Positionserfassungseinrichtung 3 die Transformation von dem Referenzpunkt R in ein positionserfassungseinrichtungsfestes Koordinatensystem, dessen Position durch die Marker 6.1, 7.1 bestimmbar ist, konstant ist.

Durch Betätigen eines Schalters 3.1 kann der Bediener eine Zusatzachse eines Kipp-Dreh-Tisches (nicht dargestellt) verstellen und so ein auf diesem Tisch fixiertes Werkstück, auf dem er mit dem Handgerät 1 Arbeitspunkte erfassen möchte, bewegen. Dabei kann es sich auch um einen Multifunktionsschalter handeln, der die Zusatzachse nur dann verstellt, wenn zuvor ein entsprechendes Menü aufgerufen wurde. In einer nicht dargestellten Abwandlung ist die Anzeige 3.2 als Touchscreen ausgebildet, auf der ein oder mehrere Eingabeschalter definiert sind

In Fig. 2 ist die Lage des handgerätfesten Referenzpunktes R in der Erfassungsstellung auf der Werkstückoberfläche erkennbar. Ohne Mess- und Rechenfehler wird somit die Raumposition dieses Referenzpunktes auf der Werkstückoberfläche als Raumposition eines Arbeitspunktes abgespeichert. Durch Mess- oder Rechenfehler kann die Raumposition des gespeicherten Arbeitspunktes jedoch fälschlich innerhalb der Werkstückkontur liegen (unter dem horizontalen Strich in Fig. 2), was bei Ausführen eines Programms mit dieser falschen gespeicherten Raumposition dazu führt, dass die Schweißwerkzeugspitze mit dem Werkstück kollidiert. Daher wird nach einem erfindungsgemäßen Verfahren die Hauptrichtung, die durch das Tastelement 5 definiert ist, d.h. im allgemeinen die Werkzeugstoßrichtung als Verschieberichtung vorgegeben. Schon bei der Speicherung der Raumposition oder auch erst bei einer Nachbearbeitung oder Kontrolle der gespeicherten Arbeitspunkte kann der Bediener durch Eingabe eines entsprechenden Verschiebebetrags die gespeicherte falsche Position in der vorgegebenen Verschieberichtung gezielt und definiert aus dem Werkstück verschieben und diese verschobene Position als Arbeitspunkt des Manipulators abspeichern. Auf diese Weise wird die kollisionsfreie Raumposition außerhalb des Werkstückes als Soll-Arbeitspunkt abgespeichert. Später kann beim Anfahren mit dem Manipulatorwerkzeug dieses wieder entlang der Verschiebeachse bis zum Auftreffen auf der Werkstückoberfläche verschoben werden.

In Fig. 8 ist eine Krafterfassungseinrichtung in Form eines Sensors 10 vergrößert dargestellt, der, wie insbesondere in den Fig. 1, 2 und 7 erkennbar, an einem Flansch des Tastelements 5 befestigt und dabei so orientiert ist, dass seine Erfassungsrichtungen mit der Stoß- bzw. Aufsetzrichtung des Tastelements 5 zusammenfällt, so dass er in dieser Richtung eine Reaktionskraft F erfasst, welche auf das Tastelement 5 wirkt, wenn ein Bediener dieses mit einer Kraft gegen das Werkstück presst, die im Betrieb der Manipulator als Prozesskraft aufprägen soll. Es können auch mehrachsige Sensoren vorgesehen sein, die zusätzlich Reaktionskraftkomponenten in anderen Richtungen erfassen. Insbesondere kann ein Sensor als Drehmomenten- oder Kraftmomentensensor alternativ bzw. zusätzlich Drehmomente um Erfassungsachsen erfassen. Zudem kann ein ein- oder mehrachsiger Sensor auch an einer anderen Stelle, zum Beispiel zwischen Tastelement 5 und Positionserfassungseinrichtung 4, aber beispielsweise auch im Gelenk 8 angeordnet sein, um solcherart, gegebenenfalls unter entsprechender Transformation, im Referenzpunkt R auf das Tastelement 5 wirkende Reaktionskräfte zu erfassen.

Das Handgerät erfasst in zyklischen Abständen, beispielsweise mit einer Frequenz von 40 Hz, auf Basis der Position der Positionserfassungseinrichtung 4 die Position des Referenzpunktes R, insbesondere seine kartesischen Lagekomponenten x, y, z in einem vorgegebenen Bezugssystem sowie seine Orientierungskomponenten in Form der EULER- oder KARDAN-Winkeln α, β, γ eines referenzpunktfesten Koordinatensystems gegen das Bezugssystem, wobei nachfolgend zur übersichtlicheren Darstellung nur auf die Komponenten x, y in der Bearbeitungsfläche des Werkstücks und z senkrecht hierzu eingegangen wird. Synchron hierzu werden die Kräfte erfasst, wobei zur übersichtlicheren Darstellung nachfolgend nur auf die in Stoßrichtung erfasste Kraft F eingegangen wird.

Will der Bediener nun mittels des Handgeräts 1 ein Schneiden des Werkstücks mit vorgegebener Anpresskraft senkrecht zur Bearbeitungsfläche programmieren, führt er das dem Schneidwerkzeug entsprechende Tastelement 5 in gewünschter Weise an die Bearbeitungsfläche heran und dann unter manueller Aufprägung der gewünschten Anpresskraft längs einer gewünschten Bearbeitungsbahn auf dem Werkstück.

Bereits während dieses Teachens oder auch im Anschluss hieran wählt er, beispielsweise durch entsprechende, menügeführte Eingabe über die Tasten 3.3, für die Richtungen Δx, Δy tangential zur Bearbeitungsfläche die aufgezeichneten Positionskomponente x, y als alleinige und mithin dominante Sollgrößen xₛ, yₛ einer Lageregelung. Für die Richtung z hingegen wählt er, wiederum durch entsprechende menügeführte Eingabe über die Tasten 3.3, für einen kontaktfreien Zustand die Positionskomponente z als alleinige Sollgrößen einer Lageregelung, für Kontakt zwischen Taster 5 und Werkstück hingegen eine Kraftregelung. Der Übergang zwischen kontaktierendem und kontaktfreiem Zustand kann präzise auf Basis der sich dabei signifikant ändernden erfassten Kraft F erfasst werden. Gleichermaßen kann den Bediener auch manuelle zwischen der Positionskomponente z und der Kraft F wählen, etwa durch entsprechende Eingabe über eine Taste 3.3, sobald er mit dem Taster 5 das Werkstück berührt.

Anschließend wird, beispielsweise im Handgerät 1 selber oder in einer Verarbeitungseinrichtung (nicht dargestellt), die die von Handgerät erfassten Positionen und Kräfte drahtlos, drahtgebunden oder über eine Schnittselle erhält, die Reaktionskraft F in z-Richtung projiziert und die resultierende Komponente F_{z} als Sollgröße Fₛ der Kraftregelung in dieser z-Richtung vorgegeben. Dabei werden vorher oder anschließend die erfassten Positionskomponenten x, y und/oder die Kraftkomponente F_{z} bzw. Fₛ durch eine geeignete Signalverarbeitung S (vgl. Fig. 9) geglättet.

Anschließend werden die so erhaltenen Positions- bzw. Kraftkomponenten als Soll-Größen einer Positions- bzw. Kraftregelung in der jeweiligen Richtung in einer Manipulatorsteuerung C (vgl. Fig. 9) abgespeichert, so dass diese beim Abarbeiten des Programms das manipulatorgeführte Schneidwerkzeug auf der vom Bediener durch das Handgerät geteachten Bearbeitungsbahn auf der Werkstückoberfläche mit dem dabei gewünschten Anpressdruck senkrecht zur Bearbeitungsfläche führt.

Fig. 9 zeigt die entsprechenden Verfahrensschritte: zunächst werden synchron sowohl die Positionen x, y, z,... als auch die Kräfte F, Fₓ, F_{y},... erfasst.

Für jede Richtung, beispielsweise die kartesischen Richtungen x, y, z und die Orientierungsrichtungen α, β, γ, oder durch die Freiheitsgrade, insbesondere Gelenkstellungen des Manipulators definierte Richtungen, wird jeweils eine Positions- oder eine Kraftkomponente gewählt, wie in Fig. 9 durch schematische Schaltstellungen angedeutet. Dabei hat der Bediener vorab durch Eingabe über die Tasten 3.3 die Positionskomponenten x, y, in den Tangentialrichtungen Δx, Δy zur Bearbeitungsfläche gewählt.

Für die z-Richtung senkrecht hierzu hat der Bediener entweder ein Umschalten bei Kontakt gewählt. Dieser Kontakt wird auf Basis der erfassten Kraft F erfasst. Auf diese Weise wird automatisch zwischen einer Vorgabe der Positionskomponente z senkrecht zur Bearbeitungsfläche im kontaktfreien Zustand und der Vorgabe der Kraftkomponente F_{z} als Sollgröße für die Manipulatorsteuerung C gewählt, wie in Fig. 9 angedeutet. Gleichermaßen kann der Bediener auch manuell, beispielsweise wiederum über entsprechende Eingabe über die Tasten 3.3, für gewünschte Bereiche der geteachten Bahn die Kraftkomponente F_{z} als Sollgröße für die Manipulatorsteuerung C wählen.

Die gewählten Größen werden nach einer Signalverarbeitung S, zum Beispiel einem Glättung, aber auch einer Transformation, die gleichermaßen jeweils wenigstens teilweise im Handgerät 1 und/oder nach Übertragung von dessen Daten beispielsweise in einer Verarbeitungseinrichtung (nicht dargestellt) erfolgen kann, als Sollgrößen der Manipulatorsteuerung C verwendet. Zur besseren Übersichtlichkeit sind wiederum nur die genannten von insgesamt je sechs Komponenten dargestellt.

### Bezugszeichenliste

- 1: Handgerät
- 2: Griff (Handhabungseinrichtung)
- 2.1: Zustimmungsschalter
- 3: tragbarer Computer (Handhabungseinrichtung)
- 3.1: Taste (Eingabeeinrichtung)
- 3.2: Anzeige (Ausgabeeinrichtung)
- 3.3: Tasten (Wahleinrichtung)
- 4: Positionserfassungseinrichtung
- 5: Tastelement
- 6, 7: Markerring
- 6.1, 7.1: reflektierender Marker
- 6.2, 7.2: Mittelsenkrechte
- 8: Kugelgelenk
- 10: Kraftsensor (Krafterfassungseinrichtung)

- α: Winkel zwischen Erfassungs- und Hauptrichtung
- 180°-β: Winkel zwischen Mittelsenkrechten der Markerringe
- R: Referenzpunkt (TCP)

## Patentansprüche

1. Tragbares Handgerät (1) zum Steuern und/oder Programmieren eines Manipulators, insbesondere eines Roboters, mit
einer Handhabungseinrichtung (2, 3) zur Handhabung des Handgerätes durch einen Bediener;
einem Tastelement (5), an dem ein Referenzpunkt (R) definiert ist;
einer mit dem Tastelement, insbesondere lösbar, verbundenen Positionserfassungseinrichtung (4) zur Erfassung einer Position (x, y, z, α, β, γ) des Referenzpunktes;
**dadurch gekennzeichnet, dass**
die Handhabungseinrichtung (2, 3) und die Positionserfassungseinrichtung (4) gelenkig miteinander verbunden sind, und
das Handgerät eine Krafterfassungseinrichtung (10) zur Erfassung einer auf das Tastelement wirkende Reaktionskraft (F) aufweist.

2. Handgerät nach Anspruch 1, **dadurch gekennzeichnet, dass** Handhabungseinrichtung und Positionserfassungseinrichtung, insbesondere lösbar, in einem Drehgelenk (8) mit wenigstens einem, insbesondere sperrbaren oder selbstsperrenden, Drehfreiheitsgrad miteinander verbunden sind.

3. Handgerät nach einem der vorhergehenden Ansprüche, **dadurch gekennzeichnet, dass** die Handhabungseinrichtung eine Eingabeeinrichtung (3.1) zur Eingabe durch den Bediener, eine Ausgabeeinrichtung (3.2) zur Ausgabe an den Bediener und/oder einen Griff (2) für den Bediener aufweist.

4. Handgerät nach Anspruch 3, **dadurch gekennzeichnet, dass** die Eingabeeinrichtung (3.1) zur Steuerung einer Zusatzachse des Manipulators, insbesondere eines Werkzeugtisches eingerichtet ist und/oder eine Wahleinrichtung (3.3) zur Auswahl aus einer Positions- und einer Kraftkomponente aufweist.

5. Handgerät nach einem der vorhergehenden Ansprüche, **dadurch gekennzeichnet, dass** das Tastelement oder die Positionserfassungseinrichtung und das mit ihr verbundene Tastelement im Wesentlichen die Form wenigstens eines Teils einer Außenkontur eines Manipulatorwerkzeugs aufweisen.

6. Handgerät nach einem der vorhergehenden Ansprüche, **dadurch gekennzeichnet, dass** die Positionserfassungseinrichtung wenigstens einen aktiven und/oder passiven Marker (6.1, 7.1) und/oder wenigstens einen Sensor zur Erfassung der Position aufweist.

7. Handgerät nach Anspruch 6, **dadurch gekennzeichnet, dass** die Positionserfassungseinrichtung mehrere Marker (6.1, 7.1) und/oder Sensoren aufweist, die über den Umfang wenigstens eines Ringes (6, 7) verteilt sind, der sich um die, insbesondere im Wesentlichen zylindrische, Positionserfassungseinrichtung herum erstreckt.

8. Handgerät nach einem der vorhergehenden Ansprüche, **dadurch gekennzeichnet, dass** einer Erfassungsrichtung wenigstens eines Markers (6.1, 7.1) und/oder Sensors unter einem Winkel (α) gegen eine Hauptrichtung des, insbesondere im Wesentlichen zylindrischen, Tastelementes und/oder der, insbesondere im Wesentlichen zylindrischen, Positionserfassungseinrichtung geneigt ist, der zwischen 15° und 75°, insbesondere zwischen 30° und 60° liegt.

9. Verfahren zum Steuern und/oder Programmieren eines Manipulators, insbesondere eines Roboters, wobei eine Position (x, y, z, α, β, γ) eines Referenzpunktes (R) eines Handgerätes (1) nach einem der vorhergehenden Ansprüche, sowie eine auf dieses Handgerät wirkende Reaktionskraft (F) erfasst und eine dominante Sollgröße (xₛ, yₛ, Fₛ) einer Steuerung des Manipulators in wenigstens einer Richtung auf Basis wahlweise einer Positionskomponente (x, y) der erfassten Position oder einer Kraftkomponente (F_{z}) der erfassten Reaktionskraft vorgegeben wird.

10. Verfahren nach Anspruch 9, **dadurch gekennzeichnet, dass** eine Positions- und eine Kraftkomponente in derselben Richtung synchron oder alternativ erfasst werden.

11. Verfahren nach einem der vorhergehenden Ansprüche 9 bis 10, **dadurch gekennzeichnet, dass** während oder nach der Erfassung zwischen der Vorgabe auf Basis der Positionskomponente und der Kraftkomponente gewählt wird.

12. Verfahren nach einem der vorhergehenden Ansprüche 9 bis 11, **gekennzeichnet durch** eine Signalverarbeitung (S) einer erfassten Positions- und/oder Kraftkomponente.

13. Verfahren, insbesondere nach einem der vorhergehenden Ansprüche 9 bis 12, zum Steuern und/oder Programmieren eines Manipulators, insbesondere eines Roboters, wobei eine Position (x, y, z, α, β, γ) eines Referenzpunktes (R) eines Handgerätes (1) nach einem der vorhergehenden Ansprüche 1 bis 8, sowie eine auf dieses Handgerät wirkende Reaktionskraft (F) erfasst und ein Umgebungskontakt des Handgerätes auf Basis der erfassten Kraft erfasst wird.

14. Computerprogrammprodukt mit Programmcode, der auf einem maschinenlesbaren Träger gespeichert ist und ein Computerprogramm umfasst, dass ein Verfahren nach einem der vorhergehenden Ansprüche 9 bis 12 ausführt, wenn es in einem Computer abläuft.

## Claims

1. A portable handheld apparatus (1) for controlling and/or programming a manipulator, in particular a robot, comprising
a handling device (2, 3) for handling of the handheld apparatus by a user;
a touch element (5), at which a reference point (R) is defined;
a position determining device (4), which is, in particular detachably, coupled with the touch element, for determining a position (x, y, z, α, β, γ) of the reference point;
**characterized in that**
the handling device (2, 3) and the position determining device (4) are pivotably coupled, and
the handheld apparatus comprises a force determining device (10) for determining a reaction force (F) acting on the touch element.

2. A handheld apparatus according to claim 1, **characterized in that** the handling device and the position determining device are, in particular detachably, coupled in a swivel joint (8) with at least one, in particular blockable or self-blocking, rotational degree of freedom.

3. A handheld apparatus according to any of the preceding claims, **characterized in that** the handling device comprises an input device (3.1) for input by the user, an output device (3.2) for output to the user and/or a handle (2) for the user.

4. A handheld apparatus according to claim 3, **characterized in that** the input device (3.1) is configured for controlling an additional axis of the manipulator, in particular a tool table, and/or comprises a choosing device (3.3) for choosing from a position component or force component.

5. A handheld apparatus according to any preceding claim, **characterized in that** the touch element or the position determining device and the touch element coupled with the position determining device essentially have the shape of at least a part of an outer contour of a manipulator tool.

6. A handheld apparatus according to any of the preceding claims, **characterized in that** the position determining device comprises at least one active and/or passive marker (6.1, 7.1) and/or at least one sensor for determining the position.

7. A handheld apparatus according to claim 6, **characterized in that** the position determining device comprises several markers (6.1, 7.1) and/or sensors, which are distributed along the circumference of at least one ring (6, 7), which stretches around the, in particular essentially cylindrically, position determining device.

8. A handheld apparatus according to any of the preceding claims, **characterized in that** a determining direction of at least one marker (6.1, 7.1) and/or sensor is tilted by an angle (α) with respect to a main direction of the, in particular essentially cylindrically, touch element and/or the, in particular essentially cylindrically, position determining device, wherein the angle (α) is between 15° and 75°, in particular between 30° and 60°.

9. A method for controlling and/or programming a manipulator, in particular a robot, wherein a position (x, y, z, α, β, γ) of a reference point (R) of a handheld apparatus (1) according to any of the preceding claims and a reaction force (F) acting on this handheld apparatus are determined, and a dominant target value (xₛ, yₛ, Fₛ) of a control of the manipulator in at least one direction is set based selectively on a position component (x, y) of the determined position or on a force component (F_{z}) of the determined reaction force.

10. A method according to claim 9, **characterized in that** a position component and a force component in the same direction are determined synchronously or alternatively.

11. A method according to any of the preceding claims 9 through 10, **characterized in that** it is chosen between the setting based on the position component and the force component during or after the determination.

12. A method according to any of the preceding claims 9 through 11, **characterized by** a signal processing (S) of a determined position component and/or force component.

13. A method, in particular according to any of the preceding claims 9 through 12, for controlling and/or programming a manipulator, in particular a robot, wherein a position (x, y, z, α, β, γ) of a reference point (R) of a handheld apparatus (1) according to any of the preceding claims 1 through 8 and a reaction force (F) acting on this handheld apparatus is determined, and a environmental contact of the handheld apparatus is determined based on the determined force.

14. A computer program product with programming code, which is stored on a machine readable carrier and comprises a computer program which performs a method according to any of the preceding claims 9 through 12 if run on a computer.

## Revendications

1. Appareil à main (1) portatif destiné à commander et/ou à programmer un manipulateur, en particulier un robot, comprenant
un dispositif de manipulation (2, 3) pour la manipulation de l'appareil à main par un opérateur ;
un élément palpeur (5) sur lequel un point de référence (R) est défini ;
un dispositif de détection de position (4) relié à l'élément palpeur, en particulier de manière détachable, et destiné à détecter une position (x, y, z, α, β, γ) du point de référence ;
**caractérisé en ce que**
le dispositif de manipulation (2, 3) et le dispositif de détection de position (4) sont reliés l'un à l'autre de manière articulée, et
l'appareil à main comprend un dispositif de détection de force (10) destiné à détecter une force de réaction (F) agissant sur l'élément palpeur.

2. Appareil à main selon la revendication 1, **caractérisé en ce que**
le dispositif de manipulation et le dispositif de détection de position sont reliés l'un à l'autre, en particulier de manière détachable, dans une articulation à charnière (8) comprenant au moins un degré de liberté de rotation, en particulier blocable ou autobloquant.

3. Appareil à main selon l'une quelconque des revendications précédentes, **caractérisé en ce que** le dispositif de manipulation comprend un dispositif d'entrée (3.1) permettant une entrée par l'utilisateur, un dispositif de sortie (3.2) permettant une sortie vers l'utilisateur et/ou une poignée (2) pour l'utilisateur.

4. Appareil à main selon la revendication 3, **caractérisé en ce que** le dispositif d'entrée (3.1) est conçu pour commander un axe supplémentaire du manipulateur, en particulier un plateau porte-outil et/ou un dispositif de sélection (3.3) permettant d'opérer une sélection parmi une composante de position et une composante de force.

5. Appareil à main selon l'une quelconque des revendications précédentes, **caractérisé en ce que** l'élément palpeur ou le dispositif de détection de position et l'élément palpeur relié à ce dernier présentent sensiblement la forme d'au moins une partie d'un contour extérieur d'un outil de manipulateur.

6. Appareil à main selon l'une quelconque des revendications précédentes, **caractérisé en ce que** le dispositif de détection de position comprend au moins un marqueur (6.1, 7.1) actif et/ou passif et/ou au moins un capteur permettant de détecter la position.

7. Appareil à main selon la revendication 6, **caractérisé en ce que** le dispositif de détection de position comprend plusieurs marqueurs (6.1, 7.1) et/ou capteurs, qui sont répartis sur toute la périphérie d'au moins une bague (6, 7) qui s'étend autour du dispositif de détection de position, en particulier sensiblement cylindrique.

8. Appareil à main selon l'une quelconque des revendications précédentes, **caractérisé en ce qu'**un dispositif de détection d'au moins un marqueur (6.1, 7.1) et/ou capteur est incliné en formant un angle (α) par rapport à une direction principale de l'élément palpeur, en particulier sensiblement cylindrique, et/ou du dispositif de détection de position, en particulier sensiblement cylindrique, qui est compris entre 15° et 75°, en particulier entre 30° et 60°.

9. Procédé de commande et/ou de programmation d'un manipulateur, en particulier d'un robot, une position (x, y, z, α, β, γ) d'un point de référence (R) d'un appareil à main selon l'une quelconque des revendications précédentes, ainsi qu'une force de réaction (F) agissant sur cet appareil à main étant détectées et une grandeur théorique dominante (xₛ, yₛ, Fₛ) d'une commande du manipulateur dans au moins une direction étant prédéfinie sur la base sélectivement d'une composante de position (x, y) de la position détectée ou d'une composante de force (F_{z}) de la force de réaction détectée.

10. Procédé selon la revendication 9, **caractérisé en ce qu'**une composante de position et une composante de force dans la même direction sont détectées de manière synchrone ou en alternance.

11. Procédé selon l'une quelconque des revendications 9 à 10, **caractérisé en ce que** pendant ou après la détection, une sélection est effectuée entre ce qui a été prédéfini sur la base de la composante de position et sur la base de la composante de force.

12. Procédé selon l'une quelconque des revendications 9 à 11, **caractérisé par** un traitement de signaux (S) d'une composante de position et/ou de force détectée.

13. Procédé, en particulier selon l'une quelconque des revendications 9 à 12, permettant de commander et/ou de programmer un manipulateur, en particulier un robot, une position (x, y, z, α, β, γ) d'un point de référence (R) d'un appareil à main (1) selon l'une quelconque des revendications 1 à 8, ainsi qu'une force de réaction (F) agissant sur cet appareil à main, étant détectées et un contact environnant de l'appareil à main étant détecté sur la base de la force détectée.

14. Produit-programme d'ordinateur comprenant un code de programme, qui est mis en mémoire sur un support lisible par une machine et qui met en oeuvre un procédé selon l'une quelconque des revendications 9 à 12 lorsqu'il est exécuté dans un ordinateur.
